# FASCICULE DE BREVET EUROPEEN

(11) **EP 1 971 954 B1**
(45) Date de publication et mention de la délivrance du brevet: **12.08.2009**
(21) Numéro de dépôt: 07731488.8
(22) Date de dépôt: 04.01.2007
(51) Int. Cl.: G06K 7/12, B07C 3/14, G06K 7/10

(54) **DISPOSITIF D'ACQUISITION D'IMAGES D'ENVOIS POSTAUX**
BILDERFASSUNGSVORRICHTUNG FÜR POSTPAKETE
POSTAL PARCEL IMAGE ACQUISITION DEVICE

(30) Priorité: 05.01.2006 FR 0650045
(43) Date de publication de la demande: 24.09.2008
(73) Titulaire: Solystic S.A.S., 94257 Gentilly Cedex (FR)
(72) Inventeur: PHILIPPE, Agnès, F-94130 Nogent Sur Marne (FR); MITTE, Claude, F-95370 Montigny Les Cormeilles (FR)
(74) Mandataire: Prugneau, Philippe
(86) Numéro de dépôt international: PCT/FR2007/050608
(87) Numéro de publication internationale: WO 2007/088290

(56) Documents cités:
- EP-A- 1 605 396
- WO-A-97/11790
- FR-A1- 2 761 178
- GB-A- 1 161 392
- GB-A- 2 413 422

## Description

L'invention concerne un dispositif d'acquisition d'images d'envois postaux, comprenant un boîtier dans lequel est disposée une caméra avec un système d'éclairage pour former une image de la surface d'un envoi à travers une fenêtre formée dans une paroi du boîtier.

On connaît déjà des dispositifs du type indiqués ci-dessus dans lequel le système d'éclairage est une source de lumière blanche, c'est-à-dire dans le domaine du visible dont les longueurs d'ondes se situent entre 400 nanomètres et 750 nanomètres, pour la lecture d'informations d'adresse figurant en contraste sur la surface des envois.

On connaît aussi du document de brevet FR-2715240 des dispositifs du type indiqué ci-dessus dans lequel le système d'éclairage émet une lumière à la longueur d'onde des Ultra Violets (UV) pour exciter une encre fluorescente, ce qui permet de lire sur la surface des envois des informations sous la forme de codes à barres fluorescentes. Comme on le sait, l'encre fluorescente excitée présente la propriété d'émettre de la lumière dont la longueur d'onde est différente de la longueur d'onde d'excitation. Par exemple, on excite l'encre fluorescente avec une lumière UV. En réponse, la lumière émise par l'encre fluorescente excitée a une longueur d'onde déterminée d'environ 600 nanomètres correspondant à la couleur orange. On utilise généralement un filtre optique disposé entre la fenêtre et la caméra pour ne laisser passer que la longueur d'onde d'émission de l'encre fluorescente excitée.

L'image formée par la caméra dans ces dispositifs de lecture connus est ensuite envoyée à un système de reconnaissance de caractères ou de décodage de codes à barres. Comme type de caméra, on utilise habituellement des caméras CCD.

Certains envois postaux sont à la fois munis d'une information d'adresse en contraste visible sur la surface de l'envoi et d'un code à barres fluorescentes. En conséquence, on utilise pour la lecture des informations sur ces envois deux dispositifs différents d'acquisition d'images avec des systèmes d'éclairage adaptés comme indiqué plus haut, ce qui présente l'inconvénient d'occuper un espace important (deux boîtiers) dans la machine de tri et aussi de multiplier les coûts d'appareillage et de maintenance. Du document de brevet EP-1605396, on connaît encore un dispositif d'acquisition d'images d'envois postaux conçu pour lire séparément des marques fluorescentes et des informations visibles par contraste figurant à la surface des envois mais la lecture de ces deux types d'information ne se fait pas en même temps.

Le but de l'invention est de remédier à ces inconvénients. A cet effet, l'invention a pour objet un dispositif d'acquisition d'images d'envois postaux, comprenant un boîtier dans lequel est disposée une caméra avec un système d'éclairage pour former une image de la surface d'un envoi à travers une fenêtre formée dans une paroi du boîtier, la surface de cet envoi comportant une information d'adresse visible par contraste et une marque fluorescente, le système d'éclairage étant agencé pour émettre un premier rayonnement lumineux en lumière visible et un second rayonnement lumineux à une certaine longueur d'onde propre à exciter une marque fluorescente, **caractérisé en ce qu**'il comprend un filtre optique passe bande disposé devant la caméra et centré sur la longueur d'onde d'émission de la dite marque fluorescente quand elle est excitée par le second rayonnement lumineux, en ce que ledit premier rayonnement lumineux contient la longueur d'onde d'émission de la dite marque fluorescente quand elle est excitée par le second rayonnement lumineux, ledit premier rayonnement lumineux éclairant dans une première zone de la fenêtre l'information d'adresse visible par contraste, ledit second rayonnement lumineux éclairant dans une seconde zone de la fenêtre la marque fluorescente, et en ce que la première et la seconde zones de la fenêtre sont éclairées en même temps par lesdits premier et second rayonnements lumineux pour une acquisition simultanée de l'image de l'adresse visible par contraste et de la marque fluorescente.

Le dispositif d'acquisitions d'images selon l'invention peut présenter les particularités suivantes :
- le système d'éclairage comprend deux sources de lumière distinctes ;
- les sources de lumières sont des diodes électroluminescentes (LED) ;
- les diodes sont disposées en rangées le long de la fenêtre ;
- les diodes émettant en lumière visible sont superposées aux diodes émettant à ladite certaine longueur d'onde ;
- un filtre optique est placé entre la caméra et la fenêtre ;
- un écran opaque est disposé entre le filtre optique et la fenêtre pour séparer les deux rayonnements lumineux ;
- le dispositif comprend en outre un capteur pour détecter la présence d'une marque fluorescente sur l'envoi, ce capteur pilotant l'allumage et/ou l'extinction desdites diodes.

Avec cet agencement du dispositif d'acquisition d'images selon l'invention, on peut lire en même temps sur la surface des envois des informations d'adresse visibles en contraste et des marques fluorescentes, par exemple des codes à barres fluorescentes, en utilisant un seul boîtier dans lequel est montée une seule caméra. Le dispositif selon l'invention peut donc être utilisé comme tête de lecture OCR et/ou tête de lecture de codes à barres visibles en contraste et/ou tête de lecture de codes à barres fluorescentes. L'utilisation de LED présente l'avantage d'obtenir un système d'éclairage matriciel directif apte à éclairer dynamiquement des zones différentes de la fenêtre du boîtier. L'utilisation du filtre optique avec l'écran opaque permet d'améliorer la qualité de la lecture des informations sur la surface des envois.

Le dispositif d'acquisition d'images est décrit plus en détail ci-après et illustré par les dessins. Cette description n'est donnée qu'à titre d'exemple indicatif et nullement limitatif de l'invention.
La figure 1 est une représentation schématique de la surface d'un envoi postal comportant une information d'adresse en contraste et un code à barres fluorescentes.
La figure 2 est une représentation schématique en vue de dessus du dispositif d'acquisition selon un premier mode de réalisation de l'invention.
La figure 3 est une représentation schématique en vue de côté du dispositif d'acquisition de la figure 2.
La figure 4 est une représentation schématique en vue de côté du dispositif d'acquisition selon un deuxième mode de réalisation.

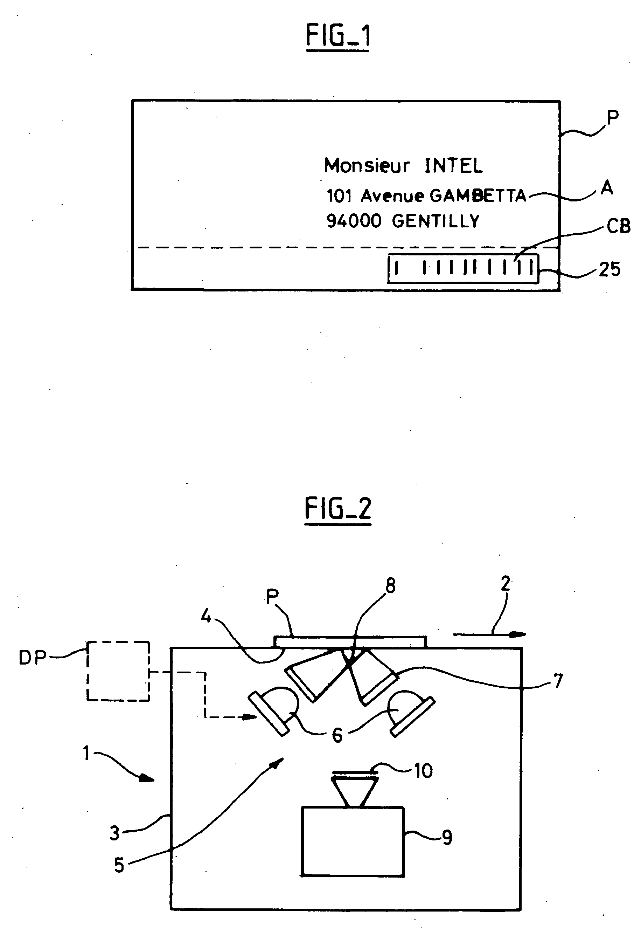

Sur la figure 1, on a illustré un envoi postal P ayant une surface sur laquelle est apposée une information d'adresse de distribution A figurant en contraste visible par exemple en noir sur un fond blanc et également un code à barres CB imprimé avec une encre fluorescente. Comme visible sur la figure 1, le code à barres est apposé comme cela est connu dans une bande située dans le bas de la surface de l'envoi portant l'information d'adresse, cette bande étant délimitée en pointillés sur la figure 1. Ce code à barres sert généralement pour le processus de tri postal automatique.

On a illustré sur la figure 2, un dispositif d'acquisition d'images 1 selon l'invention avec un envoi postal P qui est déplacé sur chant dans une machine de tri (non représentée) selon le sens de la flèche 2.

Le dispositif d'acquisition 1 comprend un boîtier ou une boîte noire 3 opaque à la lumière et muni d'une fenêtre rectangulaire 4 sur la paroi face à laquelle est déplacé l'envoi P. Dans le boîtier 3, on a illustré un système d'éclairage 5 constitué, par exemple, de deux barrettes de diodes électroluminescentes 6 disposées en deux rangées perpendiculaires à la direction 2 de part et d'autre de la fenêtre 4. Chaque barrette peut être composée de plusieurs rangées verticales de diodes. Sur la figure 2, on a représenté de façon très schématique un dispositif optique 7 qui est apte à concentrer le rayonnement lumineux 8 des diodes 6 vers la fenêtre 4.

Dans le boîtier 3, on a également représenté une caméra linéaire CCD 9 ("Charge-Coupled Device" - Dispositif à Couplage de Charges) de type TDI ("Time Delayed Integration" - Disposition Matricielle) configurée de manière à acquérir des images des envois postaux avec une résolution de 8 points par millimètre. Le capteur de la caméra linéaire CCD 9 est orienté perpendiculairement au sens de déplacement 2 pour faire l'acquisition d'unie image de la surface de l'envoi postal P pendant son déplacement devant la fenêtre 4 éclairée par le système 5.

Sur la figure 2, on a représenté un filtre optique passe bande 10, dont le fonctionnement sera détaillé ci-après, qui est disposé devant l'objectif de la caméra 9.

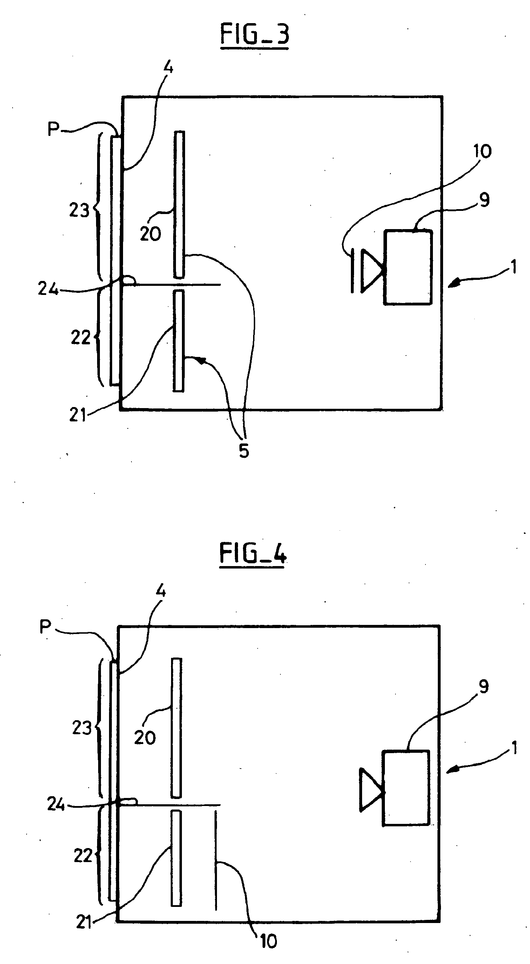

Sur la figure 3, on a représenté le système d'éclairage 5 sous la forme d'un premier ensemble de diodes 20 émettant en lumière visible, par exemple en lumière blanche, dans une zone supérieure 23 de la fenêtre 4 et un second ensemble de diodes 21 émettant à une longueur d'onde d'excitation de l'encre fluorescente dans une zone inférieure 22 de la fenêtre 4. On choisit, par exemple, une longueur d'onde d'excitation de 470 manomètres ce qui correspond à la couleur bleue. L'ensemble de diodes 20 superposé à l'ensemble de diodes 21 forment deux sources de lumière distinctes de sorte que les deux zones 22 et 23 sont également distinctes pour éviter des interférences lumineuses. Comme on peut le comprendre, l'envoi P est présenté face à la fenêtre 4 avec la bande inférieure de la surface de l'envoi (contenant le code à barres CB) qui est placée dans la zone 22 tandis que l'information d'adresse postale en contraste A est placée dans la zone 23, ces deux zones 22 et 23 étant bien entendu éclairées en même temps par les diodes 20 et 21.

Sur la figure 3, on a représenté un écran opaque 24 qui est placé à la jonction entre les deux zones 22 et 23 de la fenêtre 4, c'est à dire entre la fenêtre et le filtre 10 pour séparer les deux rayonnements lumineux 20 et 21 ce qui a pour effet d'empêcher le rayonnement lumineux émis par les diodes 20 d'éclairer la zone 22 de la fenêtre 4 lors de l'acquisition de l'image du code à barres fluorescentes CB sur la surface de l'envoi. Cet écran 24 permet en conséquence d'éviter des interférences lumineuses entre les rayonnements émis par les deux ensembles de diodes 20 et 21 lorsqu'ils éclairent en même temps la fenêtre 4. Dans le cas d'une utilisation de diodes électroluminescentes à rayonnement très directif on peut omettre l'écran opaque 24.

En réponse au rayonnement d'excitation incident, la lumière émise par les barres fluorescentes situées dans la zone inférieure 22 a une longueur d'onde d'environ 600 manomètres correspondant à la couleur orange. Cette lumière est filtrée par le filtre optique passe bande 10 centré sur la longueur d'onde de la couleur orange ce qui permet d'éviter l'apparition dans la partie de l'image comportant le code à barres de marques en contraste visible sur l'envoi. Ce filtre optique 10 n'affecte pas la clarté de l'information d'adresse A dans l'image puisque la lumière blanche contient toutes les longueurs d'ondes du visible, en particulier celle correspondant à la couleur orange, et que la couleur des informations en contraste visible sur l'envoi P est généralement très éloignée dans le spectre des couleurs de la couleur orange.

Avec le filtre optique 10 qui est placé à proximité immédiate de l'objectif de la caméra 9, on comprend qu'il est traversé par les deux rayonnements lumineux des diodes 20 et 21 et donc le premier ensemble de diodes 20 doit émettre un rayonnement lumineux qui contienne la longueur d'onde d'émission du code à barres fluorescentes excité. Dans ce mode de réalisation de l'invention, le premier ensemble de diodes 20 peut donc émettre dans la couleur orange sans que la lecture en contraste ne s'en trouve affectée.

Sur la figure 4, on a représenté le filtre optique passe bande 10 qui est centré sur la longueur d'onde d'excitation de l'encre fluorescente et qui est disposé à proximité immédiate des diodes 21 dans le champ délimité par l'écran opaque 24 face à la zone 22 de la fenêtre 4. Avec cette construction, le filtre 10 ne filtre que la lumière réfléchie depuis la zone inférieure excité 22. Ainsi, la partie de l'image correspondant à la partie supérieure de l'envoi P contenant l'information d'adresse A en contraste visible est acquise avec un meilleur contraste quelle que soit la couleur d'impression de l'information d'adresse A, et ceci même si l'information d'adresse A est en couleur rouge ou orange.

Il est entendu que l'invention s'étend à un dispositif dans lequel le système d'éclairage 5 peut comporter plus de deux sources lumineuses comme 20 et 21 pour la lecture de plusieurs marques fluorescentes disposées à des positions différentes prédéterminées sur la surface des envois.

On peut avantageusement utiliser un capteur de détection de marque fluorescente représenté par DP sur la figure 2 et qui est disposé en amont du dispositif d'acquisition 1 selon le sens de la flèche 2. Un tel capteur est décrit dans la demande de brevet EP0408126. Un tel capteur est apte à détecter outre la présence d'une marque fluorescente, la position de cette marque sur la surface d'un envoi postal selon la direction verticale et la direction horizontale. Dans le cas où ce capteur DP est utilisé avec le dispositif 1, le système d'éclairage 5 sera agencé sous la forme d'une matrice de diodes entourant la fenêtre 4 dont les lignes horizontales sont munies à la fois de diodes émettant en lumière blanche et de diodes émettant dans la lumière bleue. Dans le cas où le capteur DP détecte la présence d'une marque fluorescente sur l'envoi P, le capteur DP envoie un signal qui commande l'extinction des diodes en lumière blanche dans la zone de la fenêtre où la marque fluorescente est présente. Cette zone verticale d'extinction des diodes électroluminescentes blanches et le temps d'extinction des diodes définissent une partie 25 de l'envoi dans laquelle la marque fluorescente est détectée. La partie 25 de l'envoi est représentée sur la figure 1. Dans le cas où le capteur DP ne détecte pas la présence d'une marque fluorescente sur l'envoi P alors toutes les diodes électroluminescentes de couleur blanche du système d'éclairage sont allumées.

## Revendications

1. Dispositif d'acquisition d'images d'envois postaux (P), comprenant un boîtier (3) dans lequel est disposée une caméra (9) avec un système d'éclairage (5) pour former une image de la surface d'un envoi à travers une fenêtre (4) formée dans une paroi du boîtier (3), la surface de cet envoi comportant une information d'adresse (A) visible par contraste et une marque fluorescente(CB), le système d'éclairage (5) étant agencé pour émettre un premier rayonnement lumineux en lumière visible et un second rayonnement lumineux à une certaine longueur d'onde propre à exciter une marque fluorescente, **caractérisé en ce qu'**il comprend un filtre optique passe bande (10) disposé devant la caméra (9) et centré sur la longueur d'onde d'émission de la dite marque fluorescente quand elle est excitée par le second rayonnement lumineux, **en ce que** ledit premier rayonnement lumineux contient la longueur d'onde d'émission de la dite marque fluorescente quand elle est excitée par le second rayonnement lumineux, ledit premier rayonnement lumineux éclairant dans une première zone (23) de la fenêtre l'information d'adresse visible par contraste, ledit second rayonnement lumineux éclairant dans une seconde zone (22) de la fenêtre la marque fluorescente, et **en ce que** la première (23) et la seconde zones (22) de la fenêtre sont éclairées en même temps par lesdits premier et second rayonnements lumineux pour une acquisition simultanée de l'image de l'adresse visible par contraste et de la marque fluorescente.

2. Dispositif selon la revendication 1, dans lequel le système d'éclairage (5) comprend deux sources de lumière (20,21) distinctes.

3. Dispositif selon la revendication 2, dans lequel les sources de lumières sont des diodes électroluminescentes (6).

4. Dispositif selon la revendication 3, dans lequel les diodes sont disposées en rangées le long de la fenêtre.

5. Dispositif selon la revendication 4, dans lequel les diodes électroluminescentes (6) émettant en lumière visible sont superposées aux diodes électroluminescentes (6) émettant à ladite certaine longueur d'onde.

6. Dispositif selon l'une des revendications précédentes, dans lequel un écran opaque (24) est disposé dans le système d'éclairage pour empêcher un chevauchement du premier et du second rayonnement lumineux dans la fenêtre.

7. Dispositif selon l'une des revendications précédentes, comprenant en outre un capteur (DP) pour détecter la présence d'une marque fluorescente (CB) sur l'envoi (P), ce capteur commandant l'allumage et/ou l'extinction desdites diodes.

8. Machine de tri postal, **caractérisée en ce qu'**elle comprend un dispositif d'acquisition d'images selon l'une des revendications 1 à 7 pour la lecture simultanée d'information d'adresse en contraste et de marques, fluorescentes sur la surface des envois postaux.

## Claims

1. Device for acquiring postal items (P) images, comprising a housing (3) in which a camera (9) is arranged with a lighting system (5) for forming an image of an item surface through a window (4) formed in a wall of the housing (3), the item surface including an address information (A) which is visible by contrast and a fluorescent mark (CB), the lighting system (5) being arranged to emit a first visible radiation and a second radiation at a certain wavelength able to excite a fluorescent mark, **characterized in that** it comprises a bandpass optical filter (10) provided in front of the camera (9) and centered on the emitting wavelength of said fluorescent mark when excited by the second radiation, **in that** said first radiation comprises emitting wavelength of said fluorescent mark when excited by second radiation, said first radiation lighting in a first area (23) of the window address information visible by contrast, said second radiation lighting the fluorescent mark in a second area (22) of the window, and **in that** the first (23) and second (22) area of the window are lighted at the same time by said first and second radiation for a simultaneous acquisition of the image visible by contrast and the fluorescent mark.

2. Device according to claim 1, in which the lighting system (5) comprises two distinct light sources (20, 21).

3. Device according to claim 2, in which the light sources are light-emitting diodes (6).

4. Device according to claim 3, in which the diodes are arranged in rows along the window.

5. Device according to claim 4, in which light-emitting diodes (6) emitting in visible light are superposed with light-emitting diodes (6) emitting at said certain wavelength.

6. Device according to one of the preceding claims, in which an opaque screen (24) is provided in the lighting system to prevent an overlapping of the first and second radiation in the window.

7. Device according to one of the preceding claims, which further comprises a sensor (DP) for detecting the presence of a fluorescent mark (CB) on the item (P), this sensor controlling the starting and/or stopping of said diodes.

8. Postal sorting machine, **characterized in that** it comprises a device for acquiring images according to one of the claims 1 to 7 for simultaneous reading of address information in contrast and the fluorescent marks on the surface of postal items.

## Patentansprüche

1. Vorrichtung zum Erfassen von Bildern von Postsendungen (P), umfassend ein Gehäuse (3), in welchem eine Kamera (9) mit einem Beleuchtungssystem (5) zum Abbilden eines Bildes von der Oberfläche einer Sendung durch ein, in einer Wand des Gehäuses (3) ausgebildetes Fenster (4) angeordnet ist, wobei die Oberfläche dieser Sendung eine durch Kontrast sichtbare Adresseninformation (A) und eine fluoreszierende Markierung (CB) umfasst, das Beleuchtungssystem (5) zur Emission einer ersten Lichtstrahlung in sichtbarem Licht und einer zweiten Lichtstrahlung mit einer gewissen, zum Anregen einer fluoreszierenden Markierung geeigneten, Wellenlänge, eingerichtet ist, **dadurch gekennzeichnet, dass** sie einen optischen Bandpass-Filter (10) umfasst, welcher vor der Kamera (9) angeordnet ist und auf die Emissionswellenlänge der fluoreszierenden Markierung zentriert ist, wenn sie durch die zweite Lichtstrahlung angeregt wird, und dass die erste Lichtstrahlung die Emissionswellenlänge der fluoreszierenden Markierung enthält, wenn sie durch die zweite Lichtstrahlung angeregt wird, wobei die erste Lichtstrahlung einen ersten Bereich (23) des Fensters die durch Kontrast sichtbare Adresseninformation beleuchtet und die zweite Lichtstrahlung einen zweiten Bereich (22) des Fensters die fluoreszierende Markierung beleuchtet, und dass der erste (23) und der zweite Bereich (22) des Fensters zur gleichzeitigen Erfassung des durch Kontrast sichtbaren Adressenbildes und der fluoreszierenden Markierung durch die erste und zweite Lichtstrahlung zur gleichen Zeit beleuchtet werden.

2. Vorrichtung gemäß Anspruch 1, in welcher das Beleuchtungssystem (5) zwei separate Lichtquellen (20, 21) umfasst.

3. Vorrichtung gemäß Anspruch 2, in welcher die Lichtquellen Elektrolumineszenzdioden (6) sind.

4. Vorrichtung gemäß Anspruch 3, in welcher die Dioden in Reihen längs des Fensters angebracht sind.

5. Vorrichtung gemäß Anspruch 4, in welcher die sichtbares Licht emittierenden Elektrolumineszenzdioden (6) von dem in gewissen Wellenlängen emittierenden Elektrolumineszenzdioden (6) überlagert sind.

6. Vorrichtung gemäß einem der vorhergehenden Ansprüche, in welcher ein opaker Schirm (24) in dem Beleuchtungssystem zum Unterbinden einer Überlappung der ersten und der zweiten Lichtstrahlung in dem Fenster angeordnet ist.

7. Vorrichtung gemäß einem der vorhergehenden Ansprüche, welche außerdem einen Sensor (DP) zur Detektion der Anwesenheit einer fluoreszierenden Markierung (CB) auf der Sendung (P) umfasst, wobei der Sensor das Leuchten und/oder das Erlöschen der Dioden steuert.

8. Postsortiermaschine, **dadurch gekennzeichnet, dass** sie eine Bilderfassungsvorrichtung gemäß einem der Ansprüche 1 bis 7 zum gleichzeitigen Lesen von Adresseninformationen aus dem Kontrast und von fluoreszierenden Markierungen auf der Oberfläche der Postsendungen umfasst.
